**Europäisches Patentamt**

**European Patent Office**

**Office européen des brevets**

(11) Publication number: **0 183 292**
**B1**

## (12) EUROPEAN PATENT SPECIFICATION

(45) Date of publication of patent specification: **04.04.90**

(21) Application number: **85201757.3**

(22) Date of filing: **29.10.85**

(60) Divisional application **89202255.9 filed on 29/10/85.**

(51) Int. Cl.⁵: **A 01 C 17/00**

(54) **A spreader.**

(30) Priority: **29.10.84 NL 8403271**

(43) Date of publication of application:
**04.06.86 Bulletin 86/23**

(45) Publication of the grant of the patent:
**04.04.90 Bulletin 90/14**

(84) Designated Contracting States:
**AT BE CH DE FR GB IT LI NL SE**

(56) References cited:
**EP-A-0 088 480**
**EP-A-0 117 005**
**FR-E- 60 031**

(73) Proprietor: **C. van der Lely N.V.**
**Weverskade 10 P.O. Box 26**
**NL-3155 ZG Maasland (NL)**

(72) Inventor: **van der Lely, Ary**
**10A Weverskade**
**Maasland (NL)**
Inventor: **Bom, Cornelis Johannes Gerardus**
**16 Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

EP 0 183 292 B1

Courier Press, Leamington Spa, England.

## Description

This invention relates to a spreader for spreading material, particularly, although not exclusively, material in a granular or powdery form such as artificial fertiliser, the spreader having a spreading member which is rotatable about an upwardly extending axis, the spreading member having a spreader blade provided with an upwardly extending wall which, during operation of the spreader, moves across a discharge aperture through which material can be delivered to the spreading member, an upper edge portion of an inner wall portion of the wall of the spreader blade moves beneath the discharge aperture, this upper edge portion sloping downwardly when the spreader is horizontal.

A spreader of this type is known from the EP—A—0117005. In this known construction the upper edge portion situated below the discharge aperture extends downwardly to the central point of the spreading member.

The FR—E—60031 shows a spreader having a rotatable blowing member with spreading blades with upstanding walls. The inner portions of said walls have upper edge portions sloping downwardly and inwardly to the central part of the blowing member. It is an object underlying the present invention to improve the spreading of the material.

According to the present invention, the lowest point of this upper edge portion is disposed at or near to a first imaginary cylinder surrounding the rotary axis of the spreading member and which includes the point of the discharge aperture situated farthest from the rotary axis, the highest point of this upper edge portion being situated at or near to a second imaginary cylinder surrounding the rotary axis and which includes the point of the discharge aperture which is nearest to the rotary axis, the said upper edge portion sloping downwardly from said highest point to said lowest point.

With a spreader constructed in this way, the material fed to the spreading member can be easily intercepted by the spreader blade in order to spread the material. In particular, the direction in which the upper edge portion slopes downwardly makes it possible for high flow rates of material to be intercepted by the spreading member and spread in a favourable manner. Through this arrangement, the downwardly sloping upper edge portion will, during movement owing to the material flowing towards the spreader member, further guide the material in a favourable manner to achieve the desired spreading of the material by the spreading member. The material particles comming into contact with the upper edge portion will be moved away from the axis of rotation towards the periphery of the spreading member. That particles may be intercepted by the other portion of the blade and may be spread by the latter in the desired direction. The direction in which the material particles encountering the said upper edge portion move will be favourably influenced if the downwardly sloping edge portion is inclined outwardly to the rear with respect to the normal direction of rotation of the spreading member.

Preferably, the upwardly extending wall extends outwardly from the rotary axis beyond the lowest point of the downwardly sloping upper edge portion, and mainly higher than the portion of the wall with the downwardly sloping upper edge portion. Through this particular arrangement the outer wall portion can intercept the material fed to the spreading member and guide it to the periphery of the spreading member.

A preferred method of guiding the material is achieved when the greatest height of the wall of the spreading blade is approximately double the greatest height of the wall portion having the downwardly sloping upper edge portion.

Preferably the spreading member is provided with a raised centre portion, the central part of which lies between a shaft head, which is fast with the rotary shaft, and a carrying member mounted thereon which at least partly supports a discharge member provided with the discharge aperture through which the material is fed to the spreading member during operation.

The material can be spread by the spreading member in the desired manner at different flow rates if the spreading member, or at least a portion of it, is disposed beneath the discharge member, provided with two side-by-side discharge apertures through which the material is fed to the spreading member. In particular, this arrangement enables widely differing flow rates to be discharged by the spreading member without variations in the spreading directions if the outer edges of these discharge apertures converge towards each other in the direction away from the rotary axis of the spreading member. The discharge member may be of a spherical form.

A construction in accordance with the present invention can be applied in a particularly favourable manner in a spreader which is provided with two spreading members which, with respect to the normal direction of forward travel of the spreader, lie side-by-side, each being supplied through at least one discharge aperture, these apertures being disposed symmetrically one on each side of a longitudinal central vertical plane of the spreader. The spreading members and the discharge apertures can be so arranged that both the spreading members can spread the material over substantially coincident sectors during operation.

For a better understanding of the present invention and to show how it may be carried into effect, reference will now be made, by way of example, to the accompanying drawings, in which:

Figure 1 is a side view of a spreader, taken in the direction of the arrow I in Figure 2;

Figure 2 is a plan view of spreading members of the spreader shown in Figure 1, when viewed on the line II—II in Figure 1;

Figure 3 is a plan view of part of the spreader taken in the direction of the arrow III in Figure 1;

Figure 4 is a view taken in the direction of the arrow IV in Figure 3;

Figure 5 is a view taken in the direction of the arrow V in Figure 3;

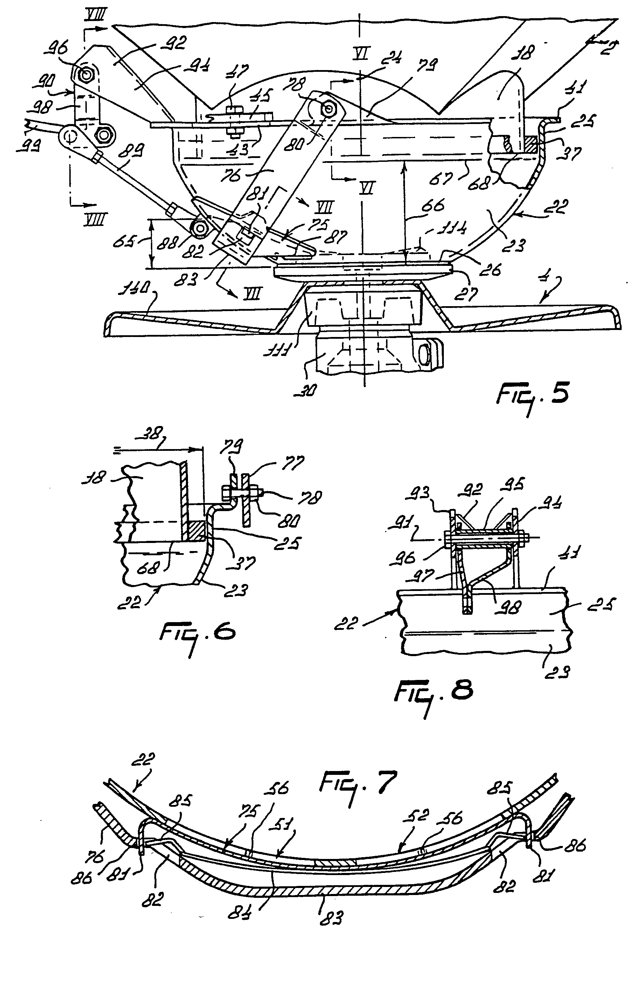

Figure 6 is a sectional view taken on the line VI—VI in Figure 5;

Figure 7 is a sectional view taken on the line VII—VII in Figure 5;

Figure 8 is a sectional view taken on the line VIII—VIII in Figure 3;

Figure 9 is a sectional view taken on the line IX—IX in Figure 3;

Figure 10 is a view in the direction of the arrow X in Figure 9, with some parts omitted;

Figure 11 is a plan view on a larger scale of a spreading blade of a spreading member;

Figure 12 is a view of the spreading blade in the direction indicated by the arrow XII in Figure 11;

Figure 13 is a sectional view of the spreading blade taken on the line XIII—XIII in Figure 12;

Figure 14 is a sectional view of the spreading blade taken on the line XIV—XIV in Figure 12; and Figure 15 is a sectional view of the spreading blade taken on the line XV—XV in Figure 12.

The spreader shown in the drawings is intended for distributing granular or powdery material, and particularly, although not exclusively distributing artificial fertiliser or seeds.

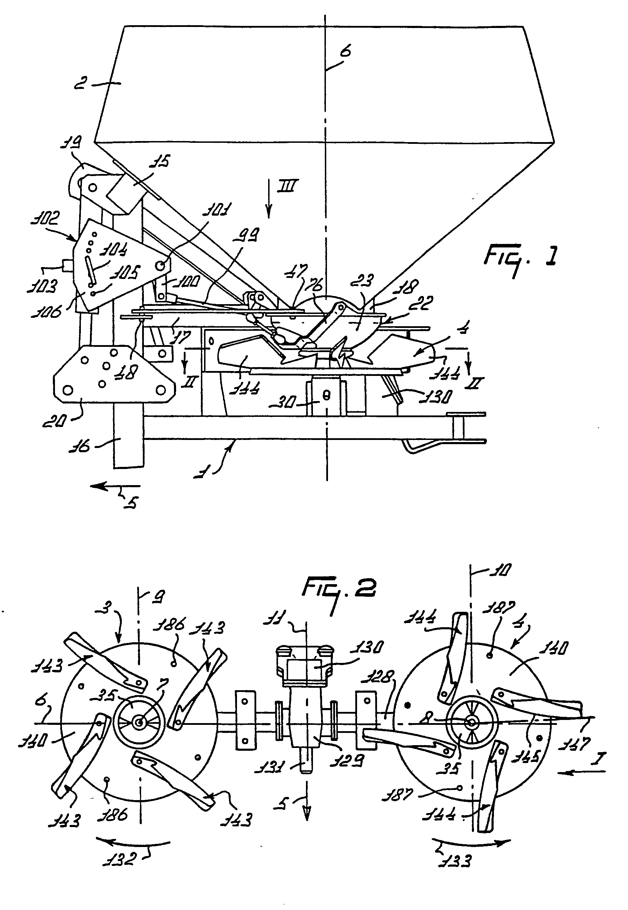

As shown in Figure 1, the spreader comprises a frame 1 carrying a hopper 2. Two spreading members 3 and 4 are disposed below the hopper 2. These spreading members 3 and 4 lie side-by-side with respect to the normal forward direction of travel of the spreader as indicated by an arrow 5 in Figure 2. In Figure 2, the hopper 2 and frame 1 have been omitted. The spreading members 3 and 4 are rotatable about rotary axes 7 and 8 which lie in a plane 6 which is vertical when the spreader is horizontal and extends perpendicular to the direction 5. The rotary axes 7 and 8 also lie in planes 9 and 10, which are parallel to each other and to the direction 5. When the spreader is horizontal, the planes 9 and 10 are vertical and are at equal distances from the longitudinal central vertical plane 11 of the spreader.

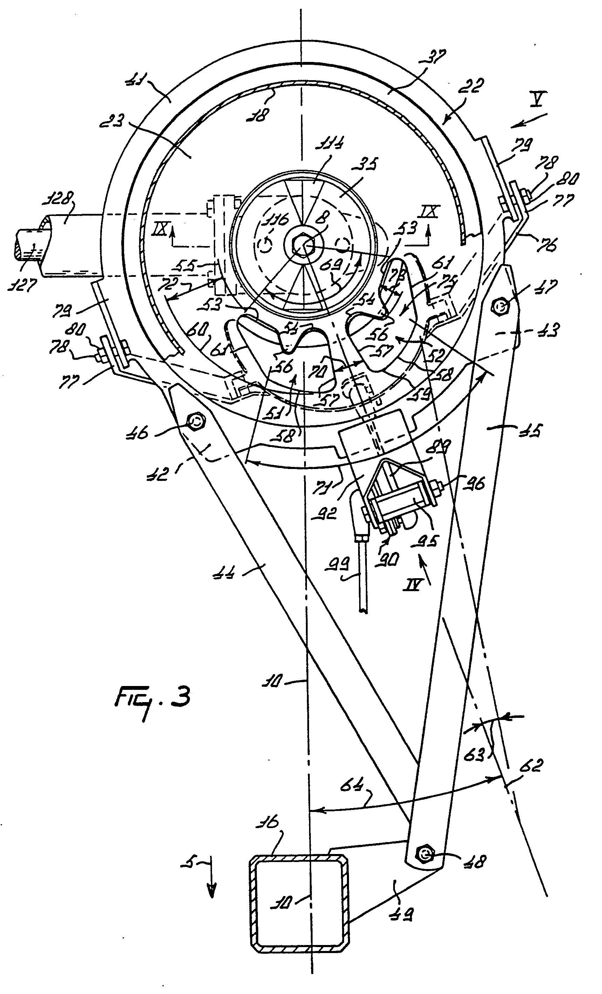

The frame 1, the hopper 2 and the mounting of the spreading members 3 and 4 are disposed substantially symmetrically about the central plane 11. The frame 1 has a horizontal upper beam 15 to which the hopper 2 is fixed. The upper beam 15 is connected to two vertical frame beams in the form of posts 16 which are spaced apart from each other, only one being visible in Figures 1 and 3. The posts 16 are fixed to supporting arms (not shown) which support the hopper 2 at its underside. It is by these means that the hopper 2 is supported between two spaced apart cylindrical discharge nozzles 18, the centre-lines of which coincide with the rotary axes 7 and 8 of the spreading members 3 and 4 respectively. The upper beam 15 of the frame 1 is provided with fixing members 19 for coupling the spreader to an upper member of a threepoint lifting mechanism of a tractor or similar vehicle. Fixing members 20 are provided on the posts 16 for coupling the spreader to the lower lifting arms of the threepoint lifting mechanism.

A discharge mechanism 22 is situated between each discharge nozzle 18 and the respective spreader member 3 and 4 located under it. Only one of these discharge mechanisms is shown in the drawings, namely the one between discharge nozzle 18 and the spreading member 4. Both discharge mechanisms are alike and are disposed symmetrically about the plane 11. Only one of the discharge mechanisms 22 will be shown further in the Figures.

The discharge mechanism 22 comprises a discharge member 23. All points on the inner side of the discharge member 23 are at the same distance from a centre-point 24 (Figure 5) which lies substantially on the rotary axis 8. The centre-point 24 is at the same vertical level as the upper end of the cylindrical discharge nozzle 18, and thus the discharge member 23 comprises an annular portion of a sphere with a cylindrical top end portion 25 which extends around the bottom end of the cylindrical discharge nozzle 18. The spherical discharge member 23 is provided with a support ring 26 on its underside, through which the discharge member 23 is open within the inner diameter 28 of the support ring 26. The support ring 26 rests on a carrying member 27 in the form of a circular disc.

The spreading member 4 and the carrying member 27 are fixed to a shaft 29 mounted in bearings in a gearbox 30. The support ring 26 rests on the top face 31 of a supporting rim 32 of the carrying disc 27. The carrying disc 27 has a surface portion 33, which is raised with respect to the face 31, and which has a diameter 34 which is significantly smaller than the inner diameter 28 of the support ring 26 so that the inner face of the support ring 26 extends around the diameter 34 of the raised portion 33 with some clearance. The top face 35 of the raised portion 34 is at approximately the same vertical level as the top face of the support ring 26 and serves as a floor of the discharge member 23 within the diameter 28. The aperture 36 defined by the support ring 26 is thus closed off by the carrying disc 27. The surface 35 and the support ring 26 supported by the surface 31 extend outwardly substantially perpendicular to the rotary axis 8 and are disposed substantially centrally with respect to this rotary axis 8.

The upper portion 25 of the discharge member 23 surrounds a sealing collar 37 which is arranged in turn around the external periphery of the discharge nozzle 18 at its lower end. The inner diameter of the upper portion 25 fits around the outer face of the sealing collar 37 with some clearance. The collar 37 could alternatively be fitted tightly to the portion 25, with the clearance provided between the collar 37 and the nozzle 18.

The upper end of the portion 25 is provided with an outwardly extending flange 41 which possesses two lugs 42 and 43 which extend towards the front of the spreader in the plane of the flange 41. Strip members 44 and 45 are secured to these lugs 42 and 43 by bolts 46 and 47 respectively. The strip members 44 and 45 are clamped tightly against the top faces of the lugs 42 and 43 by the bolts 46 and 47. The strip members 44 and 45 converge away from the flange 41 and are together secured by a bolt 48 to a lug 49 which is provided on the post 16.

The discharge member 23 is provided with two discharge apertures 51 and 52. These apertures are identical mirror-images of each other and corresponding portions of them are designated by the same reference numbers. The lower edge of each discharge aperture is formed by two portions 53 and 54 both of which lie approximately on an imaginary circle 55 centred on the rotary axis 8. A tongue 56 extends upwardly between the portions 53 and 54. The portions 54 are arcuate in form and adjoin oppositely disposed inner edges 57 of the two discharge apertures. These edges 57 when seen in plan, as in Figure 3, extend approximately radially with respect to the rotary axis 8. The inner edges 57 merge into upper edges 58 through curved transition portions at the uppermost portions 59 of these upper edges 58. The uppermost portions 59 lie on the periphery of a circle 60 centred on the rotary axis 8 such that the upper edges 58 slope towards the axis 8 from the uppermost portions 59 when seen in plan. The upper edges 58 merge into oppositely disposed outer edges 61, which converge forwardly with their respective inner edges 57. The discharge apertures 51 and 52 are disposed symmetrically one on each side of plane 62 passing through the rotary axis 8. The outer edges 61 of the apertures 51 and 52 converge forwardly as shown in Figure 3 and produced lines from these edges meet at the plane 62 at an angle of approximately 20°. The plane 62 is at an angle 64 of approximately 30° to the plane 10. As a result of this arrangement, the upper edge 58 of the discharge apertures are considerably shorter than the lower edges formed by the portions 53 and 54 and the tongue 56. The lower edges 53 and 54 are close to the support ring 26. These apertures extend upwardly in the spherical discharge member 26 such that the uppermost portions 59 of the upper edges 58 are at a distance 65 from the lower edge of the support ring 26, the distance 65 being approximately equal to half of the vertical height 66 of the spherical portion. The upper end 67 of the spherical portion is approximately level with the lower end 68 of the discharge nozzle 18 as particularly shown in Figure 5.

The discharge apertures 51 and 52 extend (as shown in plan in Figure 3) within a sector making an angle 69 at the rotary axis 8 of approximately 145°. The distance between the discharge apertures is small with respect to the magnitude of the angle 69. The wall material of the spherical member between the inner edges 57 of the discharge apertures 51 and 52 extends over an angle 70 of approximately 20° around the rotary axis 8.

The outer ends of the upper edges 58 of the discharge apertures subtend an angle 71 at the rotary axis 8, which is approximately 75°. The distance 72 between the circles 55 and 60, when seen in plan is approximately 50 mm. The tongue 56, when seen in plan extends over a distance 73, which is approximately 16 mm, from the circle 55.

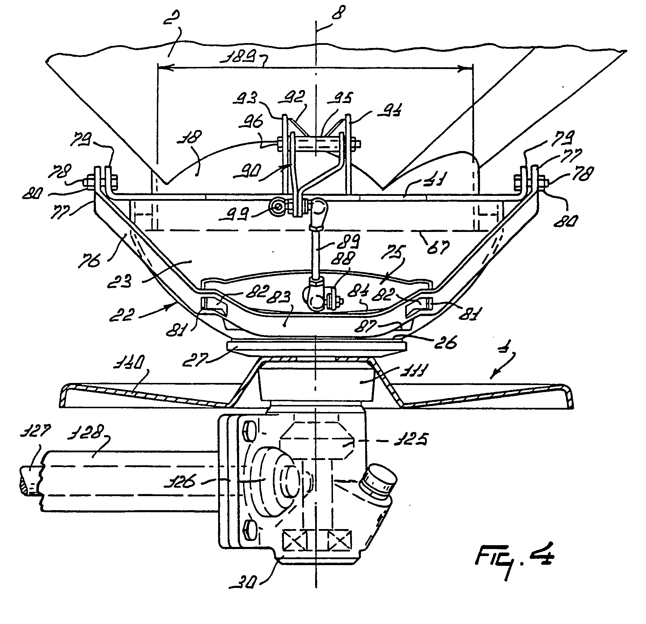

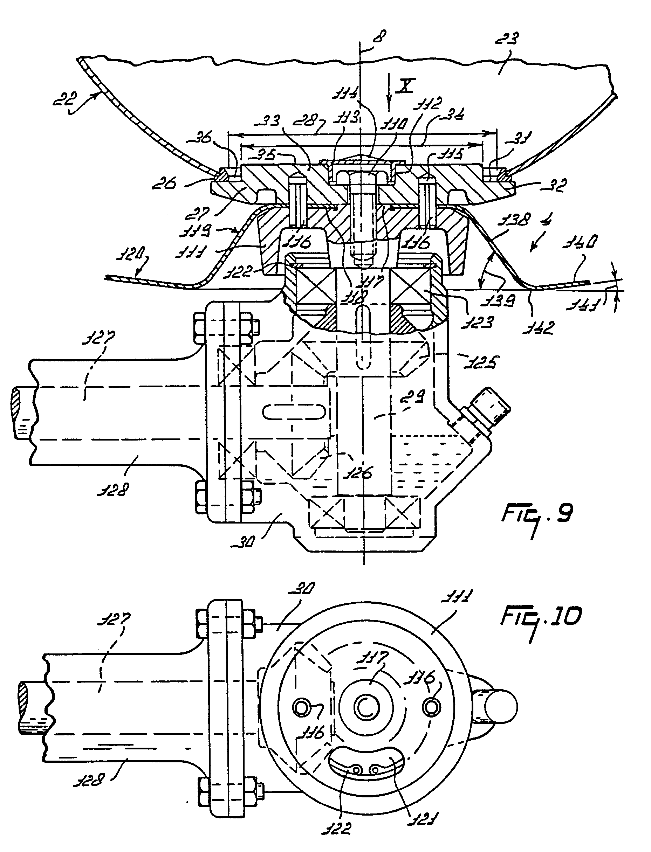

A dosing slide 75 is provided on the outside of the spherical discharge member 23 near to the discharge apertures 51 and 52 for the purpose of optionally opening or closing these apertures to a greater or lesser degree. The dosing slide 75 is spherical so that all points on the inner face of the slide are at the same distance from the centre point 24 of the discharge member 23. Thus the slide 75 fits against the outer face of the discharge member 23. The slide 75 is carried by a bracket 76 formed from a strip, which extends around the discharge member 23. The bracket 76 is hingeably connected at its extremities 77 (Figure 4) to lugs 79 by bolts 78. The lugs 79 are provided on the flange 41 of the discharge member 23 and are disposed approximately diametrically opposite each other with respect to the rotary axis 8. The bolts 78 are each rotatably arranged in a hole in the lug 79 and engage with corresponding threads in a hole in the extremities 77. The extremities 77 and the bolts 78 are fixed to each other by nuts 80. The dosing slide 75 is provided with bent-over flanges 81 (Figure 7) which are received in slots 82 in the bracket 76 so that the flanges 81 lie close to the outer edges 86 of the slots 82. The widths of the slots 82 and of the flanges 81 are so dimensioned that the flanges 81 fit freely into the slots 82. Thus it is practically impossible for the dosing slide 75 to move either lengthwise or widthwise relatively to the bracket. The slots 82 are provided in a somewhat inwardly sloping portion of the bracket so that a portion 85 of the bracket 76 between the slots 82 is spaced from the dosing slide 75. A leaf spring 84 is arranged between the slide 75 and the centre portion 83 of the bracket 76. This leaf spring 84 has lugs 85 which, as shown in particular in Figure 7, are received in the slots 82, and lie between the lugs 81. The lugs 85 are somewhat narrower than the rest of the leaf spring 84 and have a width which corresponds approximately to the width of the aperture 82. The leaf spring 84 lies with its centre portion in compression against the slide 75 and abuts the inner face of the bracket 83 near the lugs 85 and the slots 82.

The lower edge 87 of the slide 75, in the lowest position of the slide, practically lies against the supporting rim 26 and is approximately parallel to it and to an imaginary circle centred on the rotary axis 8 (Figure 5). The width of the dosing slide 75 is such that it is wider than the distance over which both discharge apertures 51 and 52 extend and thus it can entirely cover these apertures. The height of the dosing slide 75 is greater than the heights of the discharge apertures 51 and 52. The dosing slide 75 is provided with a bent-out lug 88 at its centre above the bracket 76 such that the aperture left in the slide 75 by the bent-out lug 88 lies between the inner edges 57 of the discharge apertures. The lug 88 is pivotably coupled to one end of a connecting rod 89 which is adjustable in length. The other end of the connecting rod 89 is pivotably connected to a support arm 90, which is pivotable about the axis of a hinge-pin 91 coupled to a support 92 fixed to the flange 41 of the discharge member 23. The support 92 has a cross-section of "U" form with two side flanges 93 and 94 between which a spacing-bush 95 is clamped tight by means of a bolt 96. The support arm 90 is pivotably fitted to the spacing-bush 95 and is formed by two strip members 97 and 98 which are spaced apart at their upper ends to lie adjacent the inwardly directed faces of the flanges 93 and 94. The lower ends of the strips 97 and 98 lie against each other. Another connecting rod 99 of adjustable length is pivotably coupled at one end to the lower end of the support arm 90, the other end of the connecting rod 99 being pivotably coupled to an arm 100 which is fixed to a hinge-pin 101 of an adjusting mechanism 102. An adjusting arm 103 is fixed to the hinge-pin 101 and co-operates with an adjustable stop 104 comprising a pin which can be selectively inserted in any one of a series of holes 105 in a plate 106 of segmental form.

The carrying disc 27 is fixed to a support head 111 by a single bolt 110. The support head 111 is integral with the shaft 29. The head of the bolt 110 lies in a hole 112 in the carrying disc 27 and is covered off by covering plate 113 gripped in the hole 112. The carrying disc 27 is provided on its upper face beyond the periphery of the hole 112 with two diametrically opposite protruberances 114 of triangular cross-section which extend radially outwardly with respect tot the rotary axis 8. The carrying disc 27 is further provided with holes 115 in which pins 116 fit and which pins are fixed to the support head 111. There are two holes 115 and two pins 116 which are diametrically opposite each other with respect to the rotary axis 8. The centre portion 117 of the support head 111 is somewhat raised and forms a centering boss for an upper portion 118 of a raised portion 119 of a carrying disc 120 of the spreading member 4. The height of the centering boss 117 is the same as, or a little lower than, the thickness of the upper portion 118 so that the upper portion 118 may be clamped between the support head 111 and the carrying disc 27.

The support head 111 is provided with a slot like aperture 121 (Figure 10) for fitting or removing a retaining circlip 122 which secures a bearing 123 supporting the shaft 29 at its upper end in the housing 30. The shaft 29 is provided with a gearwheel 125 which meshes with a gearwheel 126 affixed to a shaft 127. The shaft 127 is supported in bearings within a tubular housing 128 at the centre of which is provided a gear transmission box 129 with a gear change box 130. The gear transmission box 129 has a coupling shaft 131 which can be coupled to a shaft for driving the shaft 127 and thus the spreading members 3 and 4 in the directions of rotation indicated by arrows 132 and 133, respectively.

The tubular housing 128, together with its contents, is arranged symmetrically about the central plane 11 and is affixed to the frame in a manner which is not shown. The housing 128 supports the gearbox 30 with the bearing-supported shafts 29 therein which carry the spreader members 3 and 4 respectively together with the discharge mechanism 22.

The raised centre portion 119 of the carrying disc 120 has a frusto-conical wall portion 138 which merges at its upper end with the periphery of the upper portion 118. The conical portion 138 is centred on the axis 8 and slopes at an angle 139 of approximately 60° to a plane perpendicular to the axis 8. The lower end of the conical portion 138 merges, at a curved transition 142, into a carrying portion 140. The carrying portion 140 extends conically inward, with respect to a plane perpendicular to the shaft 8, at an angle 141 of approximately 7°, to the periphery of the carrying disc 120. The transition 142 between the carrying portion 140 and the conical portion 138 lies just outside the periphery of the carrying disc 27 when seen in plan view.

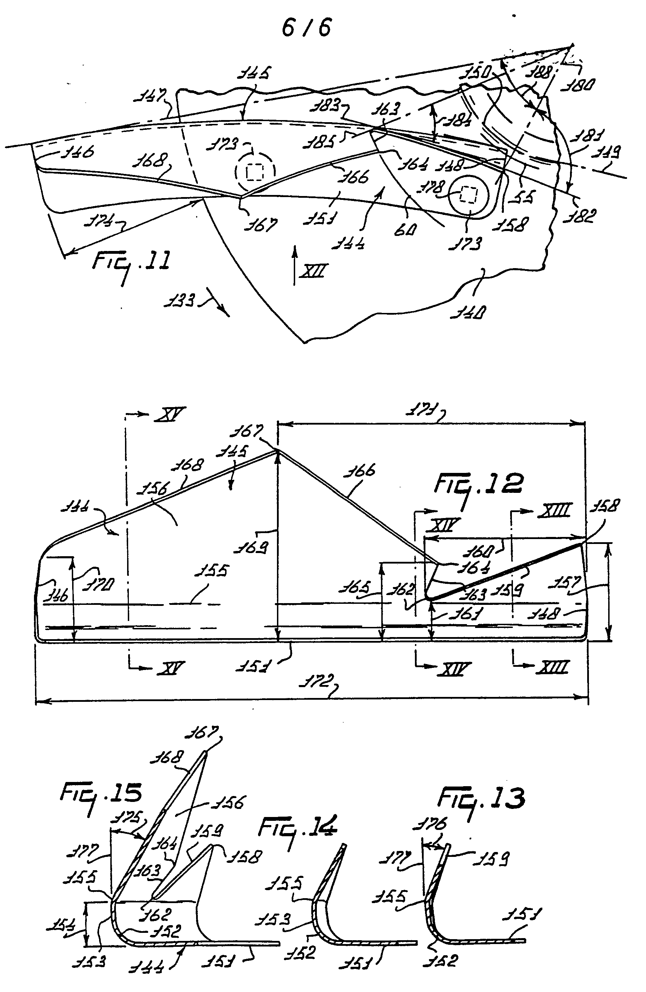

Four spreading blades 143 and 144 (Figure 2) are fitted to the carrying portion 140 of each spreading member. When seen in plan, these blades are curved with their concave sides directed toward the front with respect to the directions of rotation 132 and 133 respectively, which are opposite each other. The spreading blades of each spreading member are identical to each other, those of the spreading member 3 being mirror-images of those of the spreading member 4, in view of the opposite directions of rotation 132 and 133. The form taken by these blades will now be described with respect to one of the blades 144. The spreader blade 144 (Figure 11) has a convex wall 145 which, at its extremity 146 is tangential to a radial line 147 drawn from the rotary axis 8. From the extremity 146, the blade extends forwardly from the line 147 with respect to the direction of rotation 133 towards its inner end 148 which is situated at the curved transition 142 by the conical portion 138. The surface of the convex wall 145 is disposed such that a contact line 149 at the inner end 148 is almost tangential to the circle 150 providing the bottom end of the conical portion 138. The blades 144 have an underside 151 which lies in the plane of the carrying surface 140 of the carrying disc 120. The underside 151 merges, via a curved transition portion 152, into a wall-portion 153 which extends substantially perpendicular to the carrying surface 124. A curved transition portion 155 at the top of this upwardly extending portion 153 is at a height 154 of approximately 17 mm above the carrying surface 140, in this particular embodiment, over the entire length of the blade. The portion 153 merges, at the curved transition portion 155, into a guide portion 156 which slopes forwardly with respect to the direction of rotation 133 from bottom to top.

Near to its inner end 148, the spreader blade 144 has a height 157 above the carrying surface 140 of approximately 47 mm in this particular embodiment. The height 157 is thus almost three times the height 154. The upper edge of the upwardly extending wall portion 145 includes a portion 159 which slopes downward for a distance 160 from a point 158 at the inner end 148 to a lowest point 162. The position 162 is at a height 161 of approximately 21 mm above the carrying surface 140 in this particular embodiment, and thus the lowest point 162 is close to the curved transition portion 155. The upper edge of the spreader blade continues upward from the point 162 to a point 164 which is a distance 165 above the carrying surface 140. The distance 165 in this particular embodiment is approximately 37 mm. The distance 160 over which the upper wall portion 159 extends is such that, when viewed in plan, the edge portion 159 terminates at the point 162 at a position between the circle 55, on which the lower edges 53 and 54 of the discharge apertures 51 and 52 lie, and the circle 60, on which the uppermost points 59 of the discharge apertures lie. The edge portion 163 between the points 162 and 164 lies precisely on an imaginary cylinder which encompasses the circle 60 and which extends co-axially around the rotary axis 8.

From the point 164, the upper edge of the upstanding wall 145 has an upward extending portion 166 to a point 167 from where the upper edge slopes downwardly over a portion 168 to the extremity 146. The point 167 is at a height 169 above the underside of the spreader blade. Near the extremity 146, the lowest portion of the edge portion 168 is at a height 170 of approximately 45 mm above the underside of the blade. In this particular embodiment the distance 169 is approximately 90 mm, i.e. twice the distance 170. In the view of Figure 12, the point 167 lies at a distance 171 from the inner end 148, this distance 171 being approximately 130 mm which is a little more than half the full length 172, measured in Figure 12, of the spreader blade which in this particular embodiment is approximately 254 mm.

Each blade is fixed to the carrying surface 140 by two bolts 173 such that the round heads of the bolts lie on the upper face of the underside 151 of the blades. The bolts 173 extend through particular ones of a series of holes 178 for fixing, to the surface 140, the extremities lying nearest to the axis 8. Two series of holes 186 and 187 are provided near the periphery of the carrying disc 120 to fix the blades in these peripheral positions. The holes 186 are provided for fixing the blades 144, whilst the holes 187 are used for fixing the blades 143.

The blades extend over a distance 174 beyond the periphery of the carrier disc 120 of the spreading member. This distance 174 is approximately 1/3 of the total length 172 of the spreader blades.

The portion of the guide portion 156 between the extremity 146 and the point 164 is inclined at an angle 175 of approximately 30° with respect to the vertical portion 153. That part of the guide portion 156 between the inner end 148 and the point 162, is inclined at an angle 176 of approximately 20° to the vertical portion 153. The ends of the upstanding wall portion 145 subtend at the rotary axis 8 of the spreading member an angle 188 of approximately 50°.

For use, the spreader is coupled to the lifting mechanism of a tractor or a similar vehicle by means of the fixing members 19 and 20. When engaging this coupling the shaft 131 is connected to the tractor power take-off shaft by an auxiliary shaft.

The spreader is intended to spread material during its forward movement 5. For this purpose the spreader members 3 and 4 are driven in the directions of rotation 132 and 133, respectively, from the coupling shaft 131 when in operation. The material to be spread is contained and transported in the hopper 2 and is discharged therefrom through the two spaced discharge nozzles disposed above the spreader members 3 and 4 and is then further supplied through the discharge apertures 51 and 52 in the respective discharge mechanisms 22, to the spreader members. The hopper 2 is firmly fixed to the frame, and the discharge members 23 are arranged between the hopper 2 and their respective spreader members 3 and 4. The upper ends 25 of the discharge members 23 extend with some clearance around the sealing collars 37 which are mounted on the undersides of the discharge nozzles 18. In this manner, the sealing collars 37 provide some centering effect for the discharge member 23 around the nozzle and the rotary axis 8. The sealing collar 37 can alternatively be fitted losely to the inner face of the upper portion 25 such that it loosely surrounds the nozzle with a small clearance. The discharge member 23 is further held in place by the fixing strips 44 and 45 on the lug 49. The support ring 26 of each of the discharge members rests freely on the upper face 31 of the supporting rim 32. Owing to the clearance between the diameter 28 and the diameter 34 of the raised centre portion 33, the support ring 26 will always fit easily around the periphery of the centre portion 33. Thus the positions of the nozzle 18 and the carrying disc 27 need never be adjusted exactly and accurately with respect to one another. The upper portion 25 can thus be fitted with respect to the sealing collar 37 without the precise position of the support ring 26 around the centre portion 33 ever being of importance. By clamping the strips 44 and 45 fast to the lugs 42 and 43 and the fixing of the strips 44 and 45 in turn to the lug 49, the discharge member 23 will be firmly fixed in place with respect to the frame of the spreader. As a result, the discharge member 23 during operation maintains a very stable condition around the discharge nozzle and at least a part of its weight will be supported on the carrying disc 27. This stable condition is jointly achieved by the relatively great rigidity of the strips 44 and 45.

The carrying disc 27 is rotated with the spreader members 3 and 4 about the rotary axis 8 during operation. Despite this rotation of the carrying disc 27, the discharge members 23 will maintain stable conditions because they are held fast to the frame by the strips 44 and 45.

The support ring 26 is preferably manufactured from wear-resistant material such as Steel Code No. 52. The discharge member 23 on the other hand can be made of a softer sort of steel such as mild Steel Code No. 37, so that the member 23 can be made relatively cheaply and in a more simple manner.

The upper surface of the rotating supporting disc 27 forms the floor of the discharge member and thus a portion of the bottom of the reservoir. This rotating bottom portion has a favourable effect on the material in feeding it through the discharge apertures 51 and 52. In order to enhance this effect, the upper side of the centre portion 33 of each of the supporting discs 27 affixed to the spreader members 3 and 4 are provided with the two ridged protruberances 114.

The illustrated form of the discharge apertures 51 and 52 in the discharge members 23 is chosen such that the material can flow through these apertures in a favourable manner. Said form is such that a relatively large flow rate of material can pass from the hopper 2. When the apertures 51 and 52 in both discharge members lying under the two discharge nozzles 18 are fully open, that is to say when the slides 75 are in such a position that they offer no obstruction to the flow of material through the apertures, amounts up to 280 kg per minute can flow from the hopper. The illustrated apparatus is adaptable in a particularly favourable manner for the distribution of artificial fertiliser for example. Such material can thus be distributed in a practical manner and at a rate of 1000 kg per hour or more. The material is thrown out over equal distances on both sides with a distribution pattern density which commensurately decreases to zero from the central plane 11 of the machine to the extremity of the pattern. With this type of distribution pattern, a full-width path will be covered during one run, and the same distribution pattern over the following path taken in the next run will overlap the previously covered path by half.

In use of the spreader, the two spreader members 3 and 4 will spread material over coinciding sectors during each run, thus over a full path width. This enables a very even degree of spreading to be obtained, any possibilities of irregularity in the distribution action of one spreader member being compensated for by the action of the other spreader member. The diameter, shape and rotary speeds of the spreader members are chosen such that the material will be spread over a strip having a width of at least 48 metres approximately. The spreader members can rotate at a speed of 1000 RPM or a little more. This speed can be varied however by changing the combination of gears in the gear-box 130 which is incorporated in the drive from the coupling shaft 131 to the spreader members themselves. In this manner then, and as an example, the rotary speed of the spreader members 3 and 4 can be reduced so that the material will be spread over a narrower strip than the 48 metres wide strip mentioned above. The rotary speed and the desired strip width can thus be adjusted to requirements according to the sort of material being distributed.

The rate of flow of material through the discharge apertures 51 and 52 can be regulated by opening or closing apertures by the slide 75 by the required amount. To close the discharge apertures, the slide 75 is moved from a position in which it is above the upper edges of the discharge apertures to a lower position where the discharge apertures are closed off by the slide 75. The discharge apertures are thus progressively closed from the topmost point 59 as the slide 75 moves downwards to the lower edges 53 and 54 of both discharge apertures. The lower edges 53 and 54 of these two discharge apertures are distributed around the rotary axis 8 over such an arc that even when small quantities of material are being delivered this material will still be fed to just as great a surface area on the spreading members as a large quantity and it will leave the periphery of the spreading members at the same angle around the rotary axis 8 as it will when the discharge apertures 51 and 52 are fully open. Thus with a chosen rotary speed of the spreading members, the material will always be spread over the same sector and width of path irrespective of the amount of material being fed through the discharge apertures. Thus the area density of material applied at a chosen forward speed of the spreader will be determined. In this particular embodiment, the design of the apertures 51 and 52 is so chosen that the outermost points of the edges 53 and 54 of the apertures subtend an angle 69. The edges 61 of both apertures 51 and 52 extend in such a manner that the outermost points of the upper edges 58 of both apertures subtend an angle which is considerably smaller than the angle 69. With this arrangement there is a greater freedom of passage through the discharge apertures 51 and 52 for greater flow rates of material flowing from the hopper without changing the angle over the periphery of the spreader member where the material leaves the spreader.

The form of the apertures is chosen such that, for example, small flow rates of material can be achieved from the hopper to the spreading members 3 and 4. The slides 75 can cover off the discharge apertures 51 and 52 to such a degree that only a small gap between the lower edge 87 of the slide 75 and the lower edges 53 and 54 of the discharge aperture is sufficient to enable the material to flow therethrough. For this purpose then, the discharge apertures can be closed to such a degree that only a small quantity of material can flow from the reservoir per minute. In such a case, it can be an advantage if the curved lower edge 54 lies a little lower than the lower edge 53 so that only a small aperture can be left between the edge 54 and the edge 87. Thus, for example, the material can be spread over a desired width in such small quantities that, dependent on the ground speed of the vehicle towing the spreader and on the sort of material, as little as 30 kg per hectare can be applied.

The movement of the dosing slides and the adjustment thereof can be effected with the adjusting mechanism 102. This mechanism has an operating mechanism (now shown) for turning the hinge shaft 101 so as to move the dosing slides. By turning the shaft 101, the connecting rods 99 can be moved via the arms 100. Movement of these connecting rods 99 causes the arm 90 to pivot about the axis of the hinge shaft 91 and consequently the connecting rods 89 will move to displace the slides 75 along the outer surface of the convex discharge member of convex form. The dosing slides 75 close the discharge apertures completely when they are in their lowest positions. In order to achieve rapid and full or partial movement of the dosing slides 75 to their positions in which the discharge apertures are fully or partially opened respectively, the pin 104 is inserted into a chosen one of the holes 105. This pin 104 acts as a stop for the adjusting arm 103. The position of pin 104, depending on which one of the holes 105 it has been inserted into, determines the distance over which the slides can move to open the discharge apertures from their fully closed positions when from an end position with the discharge apertures closed, the slide is moved to abut the stop 104. The adjusting arm can also be rapidly moved back in the reverse direction to completely close the discharge apertures.

Each of the dosing slides 75 is continuously held against the outer surface of the convex discharge member by the pressure exerted on it by the respective leaf spring 84. By the choice of the dimensioning of the spherical outer faces of the discharge members, a good flow of material from the hopper is achieved. Owing to the spherical form of the dosing slides, their inner surfaces mate closely with the outer surfaces of the discharge members, and, irrespective of the position of the slides with respect to the discharge members, face-to-face contact between the dosing slides and the discharge members is always maintained without undesirable gaps occurring between them. The dosing slides 75 will thus be easily pivotable about the point 24 forming the centre of arc of the discharge members.

The hinge shaft axis of the bracket 76, established by the centre-line of the aligned bolts 78, is a short distance from the centre-point 24. This short distance will have no influence on the positioning of the slide against the external spherical surface of the discharge member, and the slide will move with some degree of play with respect to the bracket. This movement is possible because the lugs 81 are received in the slots 82 with some clearance. In the same manner, the lugs 85 lie within the width of the slot 82 with some degree of play therebetween so that the leaf spring 84 can project into it to some extent. By such an arrangement, each slide 75 will always be urged against the outer wall of its discharge member. These relative positions between the slides and the discharge members will not be disadvantageously influenced by the connection between each slide and its bracket 76.

Adjustment of the slide 75 with respect to the spherical discharge members, to close the discharge apertures therein to a greater or lesser extent, can be accurately achieved by reducing as far as possible any play in the pivoting parts of the adjusting mechanism. To this end, the arm 90 is pivotably mounted on the fixed bush clamped between the flanges 93 and 94 so that only the possible play of the arm 90 in its movement around the axis of the bush 95 might be disadvantageous. The position of the slide 75 with respect to the discharge mechanism is along the common centre-line of the bolts 78, and can be adjusted by tightening or loosening the bolts 78, so as to displace the extremities 77 of the bracket with respect to the lugs 79 where the threaded bolts engage in the threaded holes in the lips 77. The longitudinal adjustability of the connecting rods 89 and/or 99 enables both dosing slides coupled to the hinge shaft 101 to be adjusted independently with respect to the discharge apertures of both discharge members so that these discharge apertures can be closed by equal amounts to either a greater or lesser extent.

With the chosen dimensions, the centre plane 62 is inclined at an angle 64 to the plane 10, the result being that the positions of the discharge apertures 51 and 52 of each of the discharge members 23 are such that each spreader member ejects the material over equal distances from the central plane 11 of the spreader to both sides. The discharge apertures 51 and 52 can be disposed differently with respect to the plane 10, for example if the spreader has different forms of spreading members with other diametrical dimensions and other forms of blade or choices of rotational speed. Preferably, however, the apertures 51 and 52 should ordinarily lie near to the plane 10 and in front of the plane 6. In this manner ejection of material mainly to the rear with respect to the normal direction of travel 5 can be achieved. Thus no material will be thrown against the vehicle or the tractor towing the spreader. Furthermore, the spreading pattern of the material will be even over the whole width of the spread strip.

The construction of the dosing mechanism 22, as hereinbefore described with reference to the accompanying drawings and comprising the discharge member 23 and the other parts fitted thereto such as the dosing slide, facilitates manufacture and assembly of the components. The chosen forms of the discharge apertures and the discharge member provides the possibility of achieving a relatively greater or relatively smaller flow rate of material without needing too large a discharge member. In this particular embodiment, the discharge member diameter 189 is approximately 29 cm thus favourably influencing the construction of the spreader dimensionwise. An aperture such as 51 or 52 extends arcuately around the circle 55 over a distance of approximately 70 mm. The distance between both apertures, being approximately 18 mm, is approximately a quarter of the quoted distance of 70 mm. Located between the rims 53 and 54 which have a circumferential extent in a ratio 2 : 1, the tongue 56 has a height 73 of approximately 16 mm, the distance 72 being approximately 50 mm.

The material flowing from the discharge apertures 51 and 52 of both discharge members 23, flows directly to a position near the bottom of the conical portion 138 at the innermost portion of the carrying surface 140 of the spreading member. During rotation of the spreader blades 143 and 144, the material is intercepted by these blades and caused to move outward along them to their ends, at which the material leaves the blades at the desired speed and in the desired direction to provide the desired result. Inasmuch as the inner ends 148 lie on an imaginary cylinder centred on the rotary axis 8 and containing the circle 55, the inner ends being nearer to the shaft 8, the material is rapidly carried away from under the discharge apertures by the blades. Thus it is an advantage that the blade portions moving below the discharge apertures extend as shown in Figure 11, with the tangent lines 182 and 183 being inclined at angles 181 and 184 with respect to the radial lines 180 and 185 respectively, each of these angles being approximately 40°. Through this arrangement, the flow of material from the discharge apertures is favourably influenced. During their rotation, the inner end portions of the spreader blades nearest the axis of the spreading member will pass through the flow of material issuing from the discharge apertures, and the parts of the spreader blades near to the middle portion of the spreader member will effectively intercept the material. By suitably forming the blades, their rotational movement through the cascade of outflowing material will not adversely affect the direction taken by the material in achieving favourable spreading thereof. To this end, that portion of each blade disposed under the discharge apertures is provided with the edge 159 which slopes downwards and radially outwards from an upper point 158 at the inner end 148 of the blade. This downward sloping configuration of the edge 159 and its orientation as shown in figure 11 with respect to the direction of rotation 133, the material coming into contact with the upper edge 159 will be diverted away in such a manner that it will be intercepted by the guiding portion 156. Through this interception and diversion, the movement of the blade through the cascade of outflowing material will not adversely influence the direction of movement of the material itself in obtaining an even distribution pattern. Movement of the blades through the flowing cascade of material from the discharge apertures also has the added advantage that the material is intercepted and taken up by the blades in a very favourable manner so that it achieves a speed and direction whereby it can be spread effectively by the extremities 146 of the blades.

The edge 166 of each blade is preferably of a configuration such that the guiding surface 156 moves as close as possible to the discharge member 123. This edge 166, however, is positioned on the blade so that it can move easily past the bracket 76 and the fixing arrangements for the connecting rod 89 thereon as shown with other details in Figure 1. The edge 163 extends from the point 162 almost vertically upward so that the point 164 is at a height 165 which is approximately twice the height 161 at which the point 162 lies. In this arrangement, the edge 166 is disposed so that the material coming into contact with the edge portion 159 and then thrown off it can be intercepted by the surface 156. In general, the configuration of the edge portion 159 will be such that any material coming into contact with it will be projected forwards and radially outward with respect to the direction of rotation 133, so as to pass in front of the leaflike portion 156 which then receives it. It is of importance for this stage of the distribution process that the edge portion 159 is disposed as shown in figure 11, with the point 158 coinciding with the point of intersection of the tangential line 182 and the radial line 180, these two lines being inclined to each other at an angle 181 of approximately 80°. The edge portion 159 is curved so that the tangential line 183 at the point 162 on the edge portion 159 is inclined at an angle 184 of approximately 40° to the radial line 185 passing through the point 162.

For the material to be intercepted and engaged by the portion 160 of the spreader blade in the desired manner, it is also desirable that the angle 176 should be approximately 20° and that it extends somewhat more vertically than the guiding portion 156 which is inclined at an angle 175 of approximately 30° to the line 177 perpendicular to the surface 140. The configuration of the spreading members 3 and 4 is such that the disc-like portions 120 of both spreading members are identical to each other for ease of manufacture. The holes 186 can be used for fixing the blades to one spreading member whilst the holes 187 can be used for fixing the blades to the other spreading member, both in conjunction with the holes 178.

Although the particular embodiment described has two spreading members, with each spreading member lying beneath a discharge member, the construction of the discharge members with the illustrated discharge apertures 51 and 52, and the configuration of spreading members and their spreader blades can also be applied to spreaders having only one spreading member. In such a case, the advantages offered by the configuration of the discharge apertures 51 and 52 will still be available so that, in addition to enabling both small and large flow rates of material to flow from the hopper, the material can still leave the periphery of the spreader member over the same angle about the rotary axis. To this end, the disposition of this angle with respect to forward movement of the apparatus will remain the same irrespective of whether material flows from the hopper at a high or low flow rate.

The advantages accruing from the use of the illustrated configuration of the spreading members can also be achieved with discharge members of different design.

## Claims

1. A spreader having a spreading member (3, 4) which is rotatable around an upwardly extending axis (7, 8), the spreading member (3, 4) having a spreader blade (143, 144) provided with an upwardly extending wall (145) which, during operation of the spreader, moves across a discharge aperture (51, 52) through which material can be delivered to the spreading member (3, 4), an upper edge portion (159) of an inner wall portion (160) of the wall (145) of the spreader blade (143, 144) moves beneath the discharge aperture (51, 52), this upper edge portion (159) sloping downwardly when the spreader is horizontal, characterized in that the lowest point (162) of this upper edge portion (159) is disposed at or near to a first imaginary cylinder surrounding the rotary axis (7, 8) of the spreading member (3, 4) and which includes the point of the discharge aperture (51, 52) situated farthest from the rotary axis (7, 8), the highest point (158) of this upper edge portion (159) being situated at or near to a second imaginary cylinder surrounding the rotary axis (7, 8) and which includes the point of the discharge aperture (51, 52) which is nearest to the rotary axis (7, 8), the said upper edge portion sloping downwardly from said highest point (158) to said lowest point (162).

2. A spreader as claimed in claim 1, characterized in that the downwardly sloping upper edge portion (159) is inclined outwardly to the rear with respect to the normal direction of operative rotation (132, 133) of the spreading member (3, 4), the wall portion (160) being arcuate when seen in plan, with the concave side directed forwardly with respect to the normal direction of operative rotation (132, 133) of the spreading member (3, 4).

3. A spreader as claimed in claim 1 or 2, characterized in that a line (182) extending tangentially of the wall portion (160) at the highest point (158) of the upper edge portion (159) is inclined at an angle (181) of approximately 80° to a radial line (180) from the rotary axis (7, 8) passing through the highest point (158) and a line (183) extending tangentially of the wall portion (160) at the lowest point (162) of the upper edge portion (159) is inclined at an angle (184) of approximately 40° to a radial line (185) form the rotary axis (7, 8) passing through the lowest point (162).

4. A spreader as claimed in any one of the preceding claims, characterized in that an outer portion (156) of the wall (145), disposed farther from the rotary axis (7, 8) than the lowest point (162) of the upper edge portion (159), extends mainly higher than the inner wall portion (160), the upper edge (166, 168) of the outer wall portion (156) extending firstly upward from the lowest point (162) of the upper edge (159) of the inner wall portion (160) and then slopingly downwardly to the outer extremity (146) of the blade (143, 144).

5. A spreader as claimed in claim 4, characterized in that the highest point (167) on the wall (145) is situated approximately halfway along the length (172) of the spreader blade (143, 144).

6. A spreader as claimed in any one of the preceding claims, characterized in that the greatest height (157) of the inner wall portion (160) is double its smallest height (161) and in that the greatest height (169) of the spreader blade is approximately double the greatest height (157) of the inner wall portion (160).

7. A spreader as claimed in any one of the preceding claims, characterized in that the lower portion (153) of the upwardly extending wall (145) of the spreader blade (143, 144) is substantially vertical when the spreader is horizontal, the upper region of the wall (145) slopes forwardly and upwardly with respect to the normal direction of rotation (132, 133) of the spreading member (3, 4) during operation.

8. A spreader as claimed in any one of the preceding claims, characterized in that the spreader blade (143, 144) is provided on a carrying surface (140) of a disc portion (120) of the spreading member (3, 4), the carrying surface (140) sloping upwards towards the periphery of the carrying surface (140) with respect to a plane perpendicular to the rotary axis (7, 8) from a portion which is provided in the centre with a raised centre portion (119), the spreader blade (143, 144) being disposed with its inner end (148) adjacent the raised centre portion (119).

9. A spreader as claimed in any one of the preceding claims, characterized in that the centre portion (119) of the spreading member is secured between a shaft head (111), which is fast with a rotary shaft (29), and a carrying member (27) fixed thereto and supporting a discharge member (23) which is provided with the discharge aperture (51, 52) through which the material is fed to the spreading member (3, 4).

10. A spreader as claimed in claim 9, characterized in that at least part of the weight of the discharge member (23) having the discharge aperture (51, 52) is supported by the carrying member (27), the upper end (25) of the discharge member (23) surrounding the lower end of a discharge nozzle (18) depending from a hopper (2) situated above the spreading member (3, 4), the discharge member (23) being fixed to a carrying arm (44, 45) which is connected to the frame (1) of the spreader, a sealing collar (37) being provided between the upper end (25) of the discharge member (23) and the discharge nozzle (18).

11. A spreader as claimed in claim 9 or 10, characterized in that the discharge member (23) is part spherical, all points on the inner surface of the discharge member (23) being at the same distance from a point (24) on the rotary axis (7, 8) of the spreading member (3, 4), the discharge member (23) extending annularly around the rotary axis (7, 8) of the spreading member (3, 4) and being provided at its lower end with a support ring (26) which is centred on the rotary axis (7, 8), the discharge member (23) opening into the support ring (26), the floor of the discharge member (23) being provided by the carrying member (35).

12. A spreader as claimed in any one of the preceding claims, characterized in that the lower edge of the discharge aperture (51, 52) comprises two portions (53, 54) separated from each other by an upwardly extending tongue (56) which divides the lower region of the discharge aperture (51, 52) into two parts.

13. A spreader as claimed in any one of the preceding claims, characterized in that a discharge member (23) is provided with two said discharge apertures (51, 52) disposed side-by-side, the remote edges (61) of the discharge apertures (51, 52) converging towards each other in the direction away from the rotary axis (7, 8) of the spreading member (3, 4).

14. A spreader as claimed in claim 13, characterized in that both of the discharge apertures (51, 52) in the discharge member (23) can be opened or closed together to a lesser or greater extent by a single dosing slide (75) which is displaceable over both of the discharge apertures (51, 52).

15. A spreader as claimed in any one of the preceding claims, characterized in that two spreading members (3, 4) are provided side-by-side with respect to the normal direction (5) of operative travel of the spreader, each of the spreader members (3, 4) being supplied from a respective discharge aperture (51, 52), the discharge apertures (51, 52) being disposed symmetrically about the longitudinal vertical central plane of the spreader, the spreading members (3, 4) and discharge apertures (51, 52) being so arranged with respect to one another that, during operation, both spreading members (3, 4) distribute the material over substantially coincident paths.

**Patentansprüche**

1. Streuer mit einem Streuglied (3, 4), das um eine aufwärts gerichtete Achse (7, 8) drehbar ist und eine Streuschaufel (143, 144) aufweist, die mit einer aufwärts gerichteten Wand (145) versehen ist, welche sich im Betrieb des Streuers an einer Auslaßöffnung (51, 52) entlang bewegt, durch welche hindurch Streugut dem Streuglied (3, 4) zuzuführen ist, wobei sich ein oberer, in Horizontallage des Streuers abwärts verlaufender Kantenabschnitt (159) eines inneren Wandteiles (160) der Wand (145) der Streuschaufel (143, 144) unter der Auslaßöffnung (51, 52) bewegt, dadurch gekennzeichnet, daß der tiefste Punkt (162) des oberen Kantenabschnittes (159) an oder nahe einem ersten gedachten Zylinder liegt, der die Drehachse (7, 8) des Streugliedes (3, 4) umgibt und den von der Drehachse (7, 8) entferntesten Punkt der Auslaßöffnung (51, 52) enthält, daß der höchste Punkt (158) des oberen Kantenabschnittes (159) an oder nahe einem zweiten gedachten Zylinder liegt, der die Drehachse (7, 8) umgibt und den der Drehachse (7, 8) nächsten Punkt der Auslaßöffnung (51, 52) enthält, und daß der obere Kantenabschnitt von dem höchsten Ppunkt (151) zu dem niedrigsten Punkt (162) abfallend verläuft.

2. Streuer nach Anspruch 1, dadurch gekennzeichnet, daß der abwärts verlaufende obere Kantenabschnitt (159) nach außen und hinten gerichtet ist, bezogen auf die normale Drehrichtung (132, 133) des Streugliedes (3, 4), und daß der Wandungsteil (160) in Draufsicht bogenförmig verläuft, wobei die konkave Seite nach vorne gewandt ist, bezogen auf die normale Drehrichtung (132, 133) des Streugliedes (3, 4).

3. Streuer nach Anspruch 1 oder 2, dadurch gekennzeichnet, daß eine zu dem Wandungsteil (160) am höchsten Punkt (158) des oberen Kantenabschnittes (159) tangentiale Gerade (182) im Winkel (181) von annähernd 80° zu einer Radialen verläuft, die von der Drehachse (7, 8) aus durch den höchsten punkt (158) geht, und daß eine zu dem Wandungsteil (160) am niedrigsten Punkt (162) des oberen Kantenabschnittes (159) tangentiale Gerade (183) im Winkel (184) von annähernd 40° zu einer Radialen (185) verläuft, die von der Drehachse (7, 8) durch den niedrigsten Punkt (162) geht.

4. Streuer nach einem der vorhergehenden Ansprüche, dadurch gekennzeichnet, daß ein äußerer Abschnitt (156) der Wand (145), der von der Drehachse (7, 8) weiter entfernt ist als der niedrigste punkt (162) des oberen Kantenabschnittes (159), überwiegend höher liegt als der innere Wandungsteil (160), und daß die Oberkante (166, 168) des äußeren Wandabschnittes (156) zunächst von dem niedrigsten Punkt (162) des oberen Kantenabschnitts (159) des inneren Wandungsteiles (160) aufwärts und anschließend zu dem äußeren Ende (146) der Streuschaufel (143, 144) abwärts verläuft.

5. Streuer nach Anspruch 4, dadurch gekennzeichnet, daß der höchste Punkt (167) der Wand (145) etwa auf der halben Länge (172) der Streuschaufel (143, 144) liegt.

6. Streuer nach einem der vorhergehenden Ansprüche, dadurch gekennzeichnet, daß die größte Höhe (157) des inneren Wandungsteiles (160) das Doppelte von dessen kleinster Höhe (161) beträgt, und daß die größte Höhe (169) der Streuschaufel etwa das Doppelte der größten Höhe (157) des inneren Wandungsteiles (160) beträgt.

7. Streuer nach einem der vorhergehenden Ansprüche, dadurch gekennzeichnet, daß der untere Teil (153) der aufwärts gerichteten Wand (145) der Streuschaufel (143, 144) bei horizontaler Lage des Streuers im wesentlichen vertikal ist, und daß der obere Bereich der Wand (145) nach vorne und aufwärts verläuft, bezogen auf die im Betrieb normale Drehrichtung (132, 133) des Streugliedes (3, 4).

8. Streuer nach einem der vorhergehenden Ansprüche, dadurch gekennzeichnet, daß die Streuschaufel (143, 144) auf einer Tragfläche (140) eines Scheibenteiles (120) des Streugliedes (3, 4) angeordnet ist, und daß die Tragfläche (140), bezogen auf eine zur Drehachse (7, 8) rechtwinklige Ebene, in Richtung auf ihren Umfang aufwärts verläuft, ausgehend von einem im Zentrum befindlichen, einen erhabenen Mittelabschnitt (119) aufweisenden Scheibenteil, und daß die Streuschaufel (143, 144) mit ihrem inneren Ende nahe dem erhabenen Mittelabschnitt (119) liegt.

9. Streuer nach einem der vorhergehenden Ansprüche, dadurch gekennzeichnet, daß der Mittelabschnitt (119) des Streugliedes zwischen einem fest mit einer Welle (29) verbundenen Wellenkopf (111) und einem Tragglied (27) befestigt ist, das an dem Wellenkopf befestigt ist und ein Auslaßteil (23) trägt, in dem die Auslaßöffnung (51, 52) vorgesehen ist, durch die hindurch das Streugut dem Streuglied (3, 4) zugeführt wird.

10. Streuer nach Anspruch 9, dadurch gekennzeichnet, daß mindestens ein Teil des Gewichtes des Auslaßteiles (23), das die Auslaßöffnung (51, 52) aufweist, von dem Tragglied (27) getragen ist, daß das obere Ende (25) des Auslaßteiles (23) das untere Ende eines Auslaßendes (18) eines Behälters (2) umgibt, der oberhalb des Streugliedes (3, 4) angeordnet ist, daß das Auslaßteil (23) an einem Tragarm (44, 45) befestigt ist, der mit dem Rahmen (1) des Streuers verbunden ist, und daß zwischen dem oberen Ende (25) des Auslaßteiles (23) und dem Behälter-Auslaßende (18) ein Dichtring (37) angeordnet ist.

11. Streuer nach Anspruch 9 oder 10, dadurch gekennzeichnet, daß das Auslaßteil (23) teilsphärisch ist, wobei alle Punkte von dessen Innenfläche gleichen Abstand von einem Punkt (24) haben, der auf der Drehachse (7, 8) des Streugliedes (3, 4) liegt, daß das Auslaßteil (23) die Drehachse (7, 8) des Streugliedes (3, 4) ringförmig umgibt und an seinem unteren Ende mit einem Stützring (26) versehen ist, der koaxial zu der Drehachse (7, 8) angeordnet ist, und daß das Auslaßteil (23) in den Stützring (26) mündet, wobei sein Boden von dem Tragglied (35) gebildet ist.

12. Streuer nach einem der vorhergehenden Ansprüche, dadurch gekennzeichnet, daß die Unterkante der Auslaßöffnung (51, 52) zwei Abschnitte (53, 54) aufweist, die durch eine aufwärts gerichtete Zunge (56) voneinander getrennt sind, welche den unteren Bereich der Auslaßöffnung (51, 52) in zwei Teile unterteilt.

13. Streuer nach einem der vorhergehenden Ansprüche, dadurch gekennzeichnet, daß das Auslaßteil (23) zwei nebeneinander liegende Auslaßöffnungen (51, 52) aufweist, deren voneinander entfernt liegende Kanten (61) in Richtung von der Drehachse (7, 8) des Streugliedes (3, 4) nach außen konvergieren.

14. Streuer nach Anspruch 13, dadurch gekennzeichnet, daß beide Auslaßöffnungen (51, 52) des Auslaßteiles (23) gemeinsam mehr oder weniger weit mittels eines einzigen Dosierschiebers (75) zu öffnen oder zu schließen sind, der über beide Auslaßöffnungen (51, 52) verschiebbar ist.

15. Streuer nach einem der vorhergehenden Ansprüche, dadurch gekennzeichnet, daß zwei Streuglieder (3, 4) in bezug auf die Arbeitsrichtung (5) des Streuers nebeneinander angeordnet sind und jedes Streuglied (3, 4) von einer zugehörigen Auslaßöffnung (51, 52) beschickt wird, und daß die Auslaßöffnungen (51, 52) in bezug auf die vertikale Längsmittelebene des Streuers symmetrisch und derart zueinander angeordnet sind, daß beide Streuglieder (3, 4) im Betrieb das Streugut über im wesentlichen einander deckende Bereiche verteilen.

**Revendications**

1. Epandeur comportant un organe épandeur (3, 4) pouvant tourner autour d'un axe (7, 8) s'étendant vers le haut, l'organe épandeur (3, 4) ayant une lame épandeuse (143, 144) munie d'une paroi (145) s'étendant vers le haut, laquelle se meut, durant le fonctionnement de l'épandeur, au travers d'une ouverture de déversement (51, 52) à travers laquelle de la matière peut être distribuée à l'organe épandeur (3, 4), une partie (159) formant le bord supérieur d'une partie interne (160) de la paroi (145) de la lame épandeuse (143, 144) se mouvant sous l'ouverture de déversement (51, 52), cette partie (159) formant un bord supérieur étant en pente vers le bas quand l'épandeur est horizontal, caractérisé en ce que le point le plus bas (162) de cette partie (159) formant un bord supérieur est disposé sur un premier cylindre imaginaire, ou près de ce cylindre entourant l'axe de rotation (7, 8) de l'organe épandeur (3, 4) et contenant le point de l'ouverture de déversement (51, 52) situé le plus loin de l'axe de rotation (7, 8), le point le plus haut (158) de cette partie (159) formant un bord supérieur étant situé sur un deuxième cylindre imaginaire, ou près de ce cylindre entourant l'axe de rotation (7, 8) et contenant le point de l'ouverture de déversement (51, 52) qui est le plus proche de l'axe de rotation (7, 8), ladite partie formant un bord supérieur étant en pente vers le bas à partir dudit point (158) le plus haut jusqu'audit point (162) le plus bas.

2. Epandeur selon la revendication 1, caractérisé en ce que la partie (159) formant un bord supérieur en pente vers le bas est inclinée vers l'extérieur et vers l'arrière par rapport au sens normal de rotation (132, 133) de l'organe épandeur (3, 4) pendant le travail, la partie de paroi (160) étant incurvée quand elle est vue en plan, avec le côté concave dirigé vers l'avant par rapport au sens normal de rotation (132, 133) de l'organe épandeur (3, 4) pendant le travail.

3. Epandeur selon la revendication 1 ou 2, caractérisé en ce qu'une ligne (182), s'étendant tangentiellement à la partie de paroi (160) au point le plus haut (158) de la partie (159) formant un bord supérieur, est inclinée d'un angle (181) d'environ 80° par rapport à une ligne radiale (180) à partir de l'axe de rotation (7, 8) passant par le point le plus haut (158) et en ce qu'une ligne (183) s'étendant tangentiellement à la partie de paroi (160) au point le plus bas (162) de la partie (159) formant un bord supérieur, est inclinée d'un angle (184) d'environ 40° par rapport à une ligne radiale (185) partant de l'axe de rotation (7, 8) et passant par le point le plus bas (162).

4. Epandeur selon l'une quelconque des revendications précédentes, caractérisé en ce qu'une partie externe (156) de la paroi (145), disposée plus loin de l'axe de rotation (7, 8) que le point le plus bas (162) de la partie (159) formant un bord supérieur, s'étend principalement plus haut que la partie interne (160) de la paroi, le bord supérieur (166, 168) de la partie externe (156) de la paroi s'étendant tout d'abord vers le haut à partir du point le plus bas (162) du bord supérieur (159) de la partie interne (160) de la paroi, et s'inclinant ensuite vers le bas jusqu'à l'extrémité extérieure (146) de la lame (143, 144).

5. Epandeur selon la revendication 4, caractérisé en ce que le point le plus haut (167) sur la paroi (145) est situé approximativement à mi-distance sur la longueur (172) de la lame épandeuse (143, 144).

6. Epandeur selon l'une quelconque des revendications précédentes, caractérisé en ce que la plus grande hauteur (157) de la partie interne (160) de la paroi est le double de sa plus petite hauteur (161) et en ce que la plus grande hauteur (169) de la lame épandeuse est approximativement le double de la plus grande hauteur (157) de la partie interne (160) de la paroi.

7. Epandeur selon l'une quelconque des revendications précédentes, caractérisé en ce que la partie inférieure (153) de la paroi (145), s'étendant vers le haut, de la lame épandeuse (143, 144) est sensiblement verticale quand l'épandeur est horizontal, la région supérieure de la paroi (145) étant en pente vers l'avant et vers le haut par rapport au sens normal de rotation (132, 133) de l'organe épandeur (3, 4) pendant son fonctionnement.

8. Epandeur selon l'une quelconque des revendications précédentes, caractérisé en ce que la lame épandeuse (143, 144) est prévue sur une surface porteuse (140) d'un disque (120) faisant partie de l'organe épandeur (3, 4), la surface porteuse (140) étant en pente vers le haut vers la périphérie de la surface porteuse (140) par rapport à un plan perpendiculaire à l'axe de rotation (7, 8), à partir d'une partie qui est munie au centre d'une partie centrale (119) rehaussée, la lame épandeuse (143, 144) étant disposée avec son extrémité intérieure (148) adjacente à la partie centrale rehaussée (119).

9. Epandeur selon l'une quelconque des revendications précédentes, caractérisé en ce que la partie centrale (119) de l'organe épandeur est fixée entre une tête d'arbre (111) qui est solidement attachée à un arbre rotatif (29), et un élément porteur (27) fixé à celui-ci et supportant un organe de déversement (23) qui est muni de l'ouverture de déversement (51, 52) à travers laquelle la matière est distribuée à l'organe épandeur (3, 4).

10. Epandeur selon la revendication 9, caractérisé en ce qu'au moins une partie du poids de l'organe de déversement (23) ayant l'ouverture de déversement (51, 52) est supporté par l'élément porteur (27), l'extrémité supérieure (25) du déversoir (23) entourant l'extrémité inférieure d'un bec déverseur (18) pendant à partir d'une trémie (2) située au dessus de l'organe épandeur (3, 4), le déversoir (23) étant fixé à un bras porteur (44, 45) qui est relié au chassis (1) de l'épandeur, un collier d'étanchéité (37) étant prévu entre l'extrémité supérieure (25) du déversoir (23) et le bec déverseur (18).

11. Epandeur selon la revendication 9 ou 10, caractérisé en ce que le déversoir (23) est partiellement sphérique, tous les points sur la surface interne du déversoir (23) étant équidistants d'un point (24) sur l'axe de rotation (7, 8) de l'organe épandeur (3, 4), le déversoir (23) s'étendant annulairement autour de l'axe de rotation (7, 8) de l'organe épandeur et étant muni sur son extrémité inférieure d'une couronne de support (26) centrée sur l'axe de rotation (7, 8), le déversoir (23) s'ouvrant dans la couronne de support (26), le fond du déversoir (23) étant constitué par l'élément porteur (35).

12. Epandeur selon l'une quelconque des revendications précédentes, caractérisé en ce que le bord inférieur de l'ouverture de déversement (51, 52) comprend deux parties (53, 54) séparées l'une de l'autre par une langue (56) s'étendant vers le haut et divisant en deux parties la région inférieure de l'ouverture de déversement (51, 52).

13. Epandeur selon l'une quelconque des revendications précédentes, caractérisé en ce qu'un déversoir (23) est pourvu de deux desdites ouvertures de déversement (51, 52) disposées côte à côte, les bords éloignés (61) des ouvertures de déversement (51, 52) convergeant l'un vers l'autre dans le sens s'éloignant de l'axe de rotation (7, 8) de l'organe épandeur (3, 4).

14. Epandeur selon la revendication 13, caractérisé en ce que les deux ouvertures de déversement (51, 52) du déversoir (23) peuvent être ouvertes ou fermées ensemble dans une mesure plus ou moins grande par un seul tiroir doseur (75) pouvant être déplacé sur l'une et l'autre des ouvertures de déversement (51, 52).

15. Epandeur selon l'une quelconque des revendications précédentes, caractérisé en ce que deux organes épandeurs (3, 4) sont disposés côte à côte par rapport au sens de marche normal (5) de l'épandeur quand il est en service, chacun des organes épandeurs (3, 4) étant alimenté par une ouverture de déversement respective (51, 52), lesdites ouvertures de déversement (51, 52) étant disposées symétriquement de part et d'autre du plan longitudinal vertical central de l'épandeur, les organes épandeurs (3, 4) et les ouvertures de déversement (51, 52) étant disposés, les uns par rapport aux autres, de telle sorte que, pendant le fonctionnement, les deux organes épandeurs (3, 4) répartissent la matière sur des trajets sensiblement coïncidents.

FIG. 1

FIG. 2

FIG. 3

FIG. 4

Fig. 5

Fig. 6

Fig. 8

Fig. 7

EP 0 183 292 B1

FIG. 9

FIG. 10

FIG.11

FIG.12

FIG.15

FIG.14

FIG.13